# EUROPEAN PATENT APPLICATION

(11) **EP 2 930 720 A1**
(43) Date of publication of application: **14.10.2015**
(21) Application number: 14163868.4
(22) Date of filing: 08.04.2014
(51) Int. Cl.: H01B 3/04, H02K 3/32, H02K 3/34, H02K 15/12

(54) **A conductor bar for an electric machine**

(71) Applicant: ALSTOM Technology Ltd, 5400 Baden (CH)
(72) Inventor: Baumann, Thomas, 5430 Wettingen (CH); Hillmer, Thomas, 5034 Suhr (CH)
(74) Representative: Alstom Technology Ltd

(57) **Abstract**

The present disclosure relates to a conductor bar, a use of a certain material for manufacturing a conductor bar, and to a method for impregnating a conductor bar. An object of the invention is to provide for an alternative impregnation of a conductor bar for an electric machine. The invention discloses a conductor bar for an electric machine provided with a thermoplastic material, the use of a thermoplastic material for manufacturing a conductor bar of an electric machine, and a method for impregnating a conductor bar with a thermoplastic material.

## Description

### TECHNICAL FIELD

The present disclosure relates to an insulated conductor bar, a conductor bar insulation, a use of a thermoplastic material for manufacturing a conductor bar, and to a method for impregnating a conductor bar.

### BACKGROUND

The conductor bars described are especially used in an electric machine, in particular a rotating electric machine such as a synchronous generator to be connected to a gas or steam turbine (turbogenerator) or a synchronous generator to be connected to a hydro turbine (hydro generator) or an asynchronous generator or a synchronous or asynchronous electric motor, or also other types of electric machines. The conductor bars are used for the stator and are accommodated in notches usually milled into the stator or rotor body. The conductor bars, mostly having a drilled arrangement of the strands and then referred to as Roebel bars, are insulated for high voltages when used in the technical field of generators. The insulation is composed of layers of mica- glass tapes wound spirally around the conductor bars often. The free volume inside the layers are filled with a thermosetting resin, usually epoxy and/or unsaturated polyester. There exist various different methods how to accomplish this, see, for instance: C. Stone "Electric Insulation for Rotating machines", John Wiley, Interscience, chapter 4.

An object of the invention is to provide for an alternative impregnation of an insulated conductor bar and a conductor bar insulation for an electric machine.

### SUMMARY

An aspect of the invention is a conductor bar and a conductor bar insulation for an electric machine provided with a thermoplastic material.

Another aspect of the disclosure provides the use of a thermoplastic material for manufacturing the conductor bar insulation of an electric machine.

A further aspect of the present disclosure is to provide a method for impregnating a conductor bar insulation with a thermoplastic material.

These and further aspects are attained by providing an insulated conductor bar, a conductor bar insulation, a use of a thermoplastic material for manufacturing a conductor bar insulation, and a method for impregnating a conductor bar insulation in accordance with the accompanying claims.

Advantageously, thermoplastic materials in the conductor bar insulation do not need to be cured which usually needs hours of dwell time inside the moulding tool in the state of the art.

A further advantage is that the thermoplastic material is not hazardous to the manufacturing personnel. Thermoplastic materials develop no noxious volatile organic compounds, nor they need special precautions for storage since they are solid at room temperature.

Excess material remaining from a manufacturing process does not have to be disposed, but can be remelted and used for the next manufacturing process of a conductor bar.

A further advantage of the invention is the thermal conductivity of many thermoplastic materials being in the range of 0.25-0.3 W/mK, e.g. for epoxy as an example of a thermo setting material the thermal conductivity is 0.18 W/mK. This helps to increase the thermal conductivity of the entire insulation by about 30%.

Further examples are disclosed in the independent claims.

### BRIEF DESCRIPTION OF THE DRAWINGS

Further characteristics and advantages will be more apparent from the description of a preferred but non-exclusive embodiment of the conductor bar and the method to manufacture, illustrated by way of non-limiting example in the accompanying drawings, in which:
- Figure 1: is a schematic side view of a moulding tool consisting of two parts and a conductor bar between these two parts in a first manufacturing step;
- Figure 2: is a schematic side view of a moulding tool according to Fig. 1 in a second manufacturing step with the two parts pressed against each other, a vacuum pump, and a supply feeder for molten thermoplastic material;
- Figure 3: is a schematic side view of a moulding tool according to Fig. 2 in a third manufacturing step;
- Figure 4: is a schematic side view of a moulding tool according to Fig. 3 in a fourth manufacturing step with the two parts removed from each other and the finished conductor bar to be removed from the moulding tool.

### DETAILED DESCRIPTION OF EXEMPLARY EMBODIMENTS

With reference to the figures, these show schematic side views of a moulding tool 15 for manufacturing a conductor bar 3, wherein like reference numerals designate identical or corresponding parts throughout the several views.

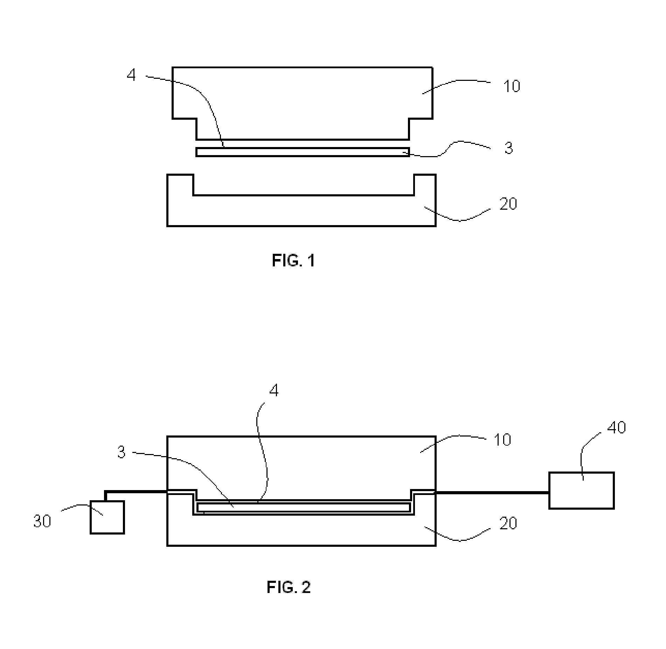

Fig. 1 shows a schematic side view of the moulding tool 15 consisting of two parts, a first part 10 above and a second part 20 below. The moulding tool 15 is an automated tool used in a fabrication process of insulating conductor bars 3 comprising heavy metal parts to apply high pressures between the first part 10 and the second part 20. Thus, the moulding tool 15 is suitable for a heat-vacuum-pressure process. The core of the conductor bar 3 is commonly made from highly conducting material, commonly copper. The first part 10 of the moulding tool 15 being rectangular with a large prominent part below to essentially fit into a recess of the second part 20. In operation the prominent part of the first part 10 abuts the conductor bar 3 from above while the recess in the second part 20 abuts the conductor bar 3 from below. With other words the conductor bar 3 is located between these two parts 10, 20 of the moulding tool 15 and essentially fills out the gap between these two parts 10, 20 in operation. Around the conductor bar 3 in the moulding tool 15 tapes are wound consisting of mica paper or glass mica- paper in this example. An additional layer of thermoplastic tape can be applied as an optional solution. The first embodiment of the invention comprises the case, where the mica or mica-glass tape is combined with a thermoplastic tape. There are various ways to combine thermoplastic layers with the mica or mica- glass tapes, for sake of simplicity both denoted as mica tapes in the following. It is to be understood that the term mica used within this disclosure also contains mica tape, mica-glass, mica-glass tapes, mica-paper, glass mica-paper and similar mica materials. First, it is disclosed here to wind alternating layers of mica and polymeric tapes. These can either consist of a neat polymeric film or made of a carrier tape made of thermoplastic material. Second, the thermoplastic material is applied onto the mica tape by passing the tape through a bath of the molten or chemically solved thermoplastic material. An alternative is to apply the thermoplastic by powder spraying. A further method is calendering on a mica tape or between two mica tapes. Calendering offers the further and preferred possibility to apply the thermoplastic material not only onto the surface of the mica tape, but to impregnate it thoroughly. This can also be used in addition to any of the above described methods. Examples of thermoplastic materials are polyamides of various types (PA), polyesters, especially Polybutyleneterephthalate (PBT), Polyethylene-terephthalate PET or

Polyethylene naphthalate (PEN), polyoxymethylene (POM), polyetheretherketone (PEEK). Prepared in such a way the conductor bar 3 is aligned between the first part 10 and the second part 20 as shown in Fig. 1 in a first manufacturing step.

In a second embodiment of the invention the material is fed into the moulding tool 15 by the feeder 30 serving also as a reservoir for the material. This may contain the same thermoplastic materials as used in the first embodiment. However, in order to reach a low viscosity required to guarantee good flow and penetration of the mica tapes, the temperature has to be high, in some cases well above 300°C. In a preferred version of the second embodiment this problem is solved by using low- viscosity precursor materials or oligomeric thermoplastic materials instead of fully polymerized thermoplastics. These materials will react to the final thermoplastic polymer inside the moulding tool 15 in the next steps. Examples for precursors are Lactames to form Polyamides and for the oligomers cyclic butadiene terephtalate to form PBT. Furthermore, according to the requirements of the application, softeners, tougheners, and antioxidants can be added to the thermoplastic. Shown in the Figs in a schematic way is the insulation 4 around the conductor bar 3 fabricated in a way wholly disclosed in this document.

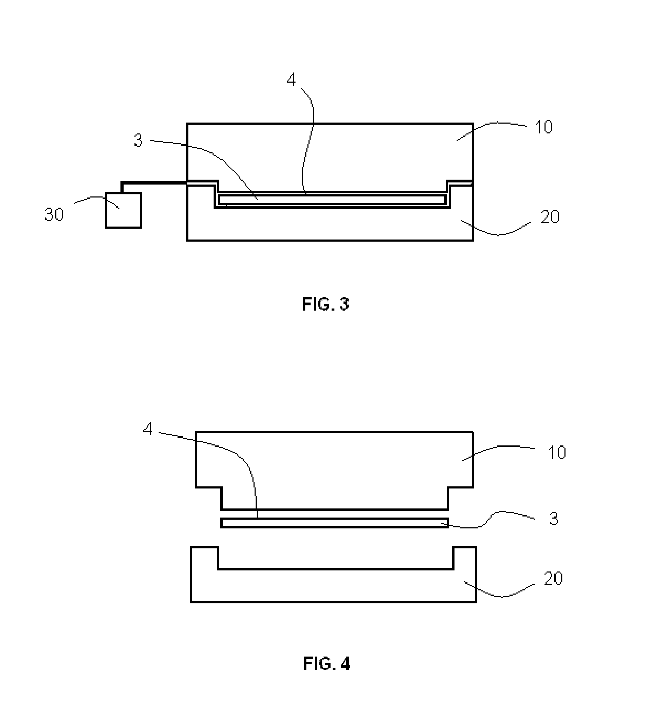

Fig. 2 is a schematic side view of the moulding tool 15 according to Fig. 1. Here, the first part 10 and the second part 20 of the moulding tool 15 are pressed together to essentially encompass the conductor bar 3. The pressure force is usually induced by a hydraulic device comprised by the moulding tool 15 to generate pressures in the range of 1bar to 20bar. In the view of Fig. 2 left from the moulding tool 15 a feeder 30 is arranged which is connected to the moulding tool 15 via a feed channel 32 to supply a thermoplastic material to the moulding tool 15. This feeder 30 will only be used in the second embodiment described below. The feed channel 32 is connected to the moulding tool 15 at a channel between the first part 10 and the second part 20, whereas the channel is formed with the first part 10 and the second part 20 pressed against each other. The feed channel 32 serves for inserting a thermoplastic material or a precursor material from the feeder 30 to the inside of the moulding tool 15 to impregnate the conductor bar 3. In the view of Fig. 2 right from the moulding tool 15 a vacuum pump 30 or vacuum generator is arranged which is connected to the moulding tool 15 via a flexible hose 42. Here, again the flexible hose 42 is connected to a channel formed between the first part 10 and the second part 20. The vacuum pump 30 generates essentially a vacuum within the moulding tool 15 in the second manufacturing step. Furthermore, a heating device (not shown) is comprised by the moulding tool 15 to apply heat to the inside of the moulding tool 15 to the end of melting the thermoplastic material. This procedure of applying a vacuum and heat in the moulding tool 15 is similar to the vacuum assisted resin transfer moulding (VRTM). In an example of the invention described the moulding tool 15 is preheated and the vacuum pump 40 creates a near vacuum in the area in which the conductor bar 3 is placed according to Fig. 2. Then, liquid material is injected from the feeder 30. In this step hydrostatic pressure smaller than the closing pressure of the moulding tool 15 is applied to the feeder 30 and the vacuum pump 40 is disconnected. In case the material is an oligomeric thermoplastic or a precursor material, it will be polymerized inside the mould tool 15 caused by means of heating. Starting materials as caprolactam contain additionally activators and catalysts. Compared to a commonly used epoxy materials or epoxy, Caprolactam as well as cyclic butylene terephthalate exhibit a melt viscosity of 0.02-0.03Pas at operation temperature. This is well below the upper threshold value for impregnation with standard epoxies which is around 0.3Pa/s. Furthermore, according to the requirements of the application, softeners, tougheners, and antioxidants can be added to the supply feeder 30. The moulding tool 15 applies a pressure

in the range of approximately 1bar to 20bar to the conductor bar 3. The polymerization, required in the second embodiment, is done in the third manufacturing step, shown by example in Fig. 3. In Fig. 3 the moulding tool 15 is still heated to heat up the conductor bar 3. The application of a vacuum by the vacuum pump 40 is not necessary in the third manufacturing step.

Fig. 4 is a schematic side view of a moulding tool 15 according to Fig. 3 in a fourth manufacturing step with the two parts 10, 20 removed from each other and the conductor bar 3 to be removed from the moulding tool 15. Finally, the heated conductor bar 3 is cooled down and removed from the moulding tool 15. Thermoplastic polymers on the conductor bar 3 do not need to be cured which usually needs hours of dwell time inside the moulding tool 15 in the state of the art. The conductor bar 3 according to this disclosure can be removed as soon as the temperature in the moulding tool 15 is below the melting temperature of the thermoplastic material.

While the invention has been described in detail with reference to exemplary embodiments thereof, it will be apparent to one skilled in the art that various changes can be made, and equivalents employed, without departing from the scope of the invention. The foregoing description of the preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments as are suited to the particular use contemplated. It is intended that the scope of the invention be defined by the claims appended hereto, and their equivalents. The entirety of each of the aforementioned documents is incorporated by reference herein. In practice the materials used and the dimensions can be chosen at will according to requirements and to the state of the art.

### REFERENCE NUMBERS

- 3: conductor bar
- 4: insulation
- 10: first part moulding tool
- 15: moulding tool
- 20: second part moulding tool
- 30: feeder for thermoplastic material
- 40: vacuum pump

## Claims

1. A conductor bar (3) for an electric machine provided with a thermoplastic material.

2. A conductor bar (3) according to claim 1 having a cover of mica material, whereas the mica material is impregnated with a thermoplastic material.

3. The conductor bar (3) according to claim 1, **characterized in that** the thermoplastic material is a polymer.

4. The conductor bar (3) according to claim 1, **characterized in that** the thermoplastic material is a monomer or oligomer.

5. The conductor bar (3) according to claim 4, **characterized in that** the thermoplastic material is the precursor of polyamide 6 (PA6), caprolactam, or a cyclic oligomer of the Polybutylen-terephthalat(PBT).

6. The conductor bar (3) according to claim 1, **characterized in that** the thermoplastic material is fully polymerized in its final form.

7. The conductor bar (3) according to claim 1, **characterized in that** the fully polymerized thermoplastic material is semicrystalline.

8. The conductor bar (3) according to claim 1, **characterised in that** the thermoplastic material is integrated in a tape made of mica or mica on a glass fabric.

9. The conductor bar (3) according to claim 1, **characterised in that** a thermoplastic carrier fabric replacing the glass fabric is melted creating a feedstock for impregnation.

10. The conductor bar (3) according to claim 1, **characterised in** a layer of mica tape and a layer of thermoplastic tape wound around the conductor bar (3).

11. A conductor bar insulation (4) fabricated from a cover of mica material, whereas the mica material is impregnated with a thermoplastic material.

12. Use of a thermoplastic material for manufacturing a conductor bar (3) of an electric machine.

13. A method for impregnating a conductor bar (3) comprising the steps of covering the conductor bar (3) with mica, covering the conductor bar (3) with a thermoplastic material, inserting the conductor bar (3) into a moulding tool (15), heating the moulding tool (15), evacuating the moulding tool (15) to a certain extend by means of a vacuum pump (40), and applying pressure to the moulding tool (15).

14. A method for impregnating a conductor bar (3) according to claim 13, **characterized in** covering the conductor bar (3) with tapes of mica and alternating covering the conductor bar (3) with tapes of a thermoplastic material.

15. A method for impregnating a conductor bar (3) according to claim 13, injecting a molten thermoplastic material into the moulding tool (15) by means of a feeder (30).
